## Europäisches Patentamt
## European Patent Office
## Office européen des brevets

(19)

(11) Veröffentlichungsnummer: **0 189 000**

**B1**

(12)

# EUROPÄISCHE PATENTSCHRIFT

(45) Veröffentlichungstag der Patentschrift:
07.06.89

(21) Anmeldenummer: 85810534.9

(22) Anmeldetag: 13.11.85

(51) Int. Cl.⁴: **F 16 B 13/04**

(54) Spreizdübel für dünnwandige Bauteile.

(30) Priorität: 20.12.84 DE 3446516

(43) Veröffentlichungstag der Anmeldung:
30.07.86 Patentblatt 86/31

(45) Bekanntmachung des Hinweises auf die Patenterteilung: 07.06.89 Patentblatt 89/23

(84) Benannte Vertragsstaaten:
AT CH DE FR GB LI NL SE

(56) Entgegenhaltungen:
DE–A– 2 819 862
DE–U– 8 032 695

(73) Patentinhaber: HILTI Aktiengesellschaft
FL-9494 Schaan (LI)

(72) Erfinder: Richter, Hanno
Lannerstrasse 5
D-8025 Unterhaching (DE)

(74) Vertreter: Wildi, Roland
Hilti Aktiengesellschaft Patentabteilung
FL-9490 Schaan (LI)

**Beschreibung**

Die Erfindung betrifft einen Spreizdübel zur Befestigung an dünnwandigen Bauteilen, mit einem Dübelkörper mit unter axialer Stauchung radial ausknickbaren Spreizarmen, die am in Einführrichtung rückwärtigen Ende einen als Widerlager dienenden Flansch aufweisen und an ihrem in Einführrichtung vorderen Ende miteinander verbunden sowie an der Verbindungsstelle mit Angriffsmitteln zur Lastaufnahme versehen sind, wobei zwischen den Spreizarmen sowie zwischen dem Flansch und der die Angriffsmittel aufweisenden Verbindungsstelle der Spreizarme ein sich im ungespreizten Zustand des Dübels etwa entlang der Hälfte des Abstandes zwischen dem Flansch und der die Angriffsmittel aufweisenden Verbindungsstelle der Spreizarme erstreckendes, die axiale Stauchung begrenzendes Anschlagteil vorgesehen ist.

Zur Befestigung an nur von einer Seite zugänglichen, dünnwandigen Bauteilen, wie Platten oder Hohlräume aufweisenden Aufnahmematerialien werden aus der DE-A-2 819 862 bekannte, sogenannte Hohlraumdübel verwendet. Zur Verankerung werden diese Dübel bis zur Anlage des Flansches an der Oberfläche des Aufnahmematerials in eine Aufnahmebohrung eingeführt. Dabei ist der Dübel so dimensioniert, dass er sich über den Grossteil seiner Länge über das Aufnahmematerial hinaus in den dahinterliegenden Hohlraum erstreckt. Anschliessend wird der Dübel beispielsweise mittels eines einen Zugdorn aufweisenden Spezialwerkzeuges oder eines Gewindebolzens axial gestaucht, so dass die Spreizarme radial ausknicken und das Aufnahmematerial hintergreifen. Das Ausmass dieser Stauchung ist von aussen nicht ersichtlich, so dass lediglich über das Ansteigen des Verformungswiderstandes gewisse Rückschlüsse über den Verankerungszustand des Dübels gezogen werden können. Zur Begrenzung der axialen Stauchung weist dieser Dübel ein sich etwa entlang der Hälfte des Abstandes zwischen dem Flansch und der die Angriffsmittel aufweisenden Verbindungsstelle der Spreizarme erstreckendes Anschlagteil auf. Dabei ist der Dübel samt dem Anschlagteil einstückig aus Kunststoff gespritzt.

Neben den aus Kunststoff bestehenden Dübeln werden für gewisse Anwendungen bevorzugt entsprechende Ausführungen aus Metall verwendet. Diese Dübel bestehen meist aus Blech und weisen dadurch gegenüber den aus Kunststoff bestehenden Dübeln höhere Festigkeitswerte auf und sind zudem hitzebeständig.

Bei der Verwendung dieser aus Metall bestehenden Spreizdübel in weichen Aufnahmematerialien, wie Kunststoff oder dgl. hat sich gezeigt, dass ein Ueberspreizen des Dübels möglich ist, wobei es zu Beschädigungen des Aufnahmematerials und des Dübels kommen kann. Solche Schäden sind von aussen meist nicht erkennbar und können daher bei Belastung zu Ausfällen des Dübels führen.

Der Erfindung liegt die Aufgabe zugrunde, einen wirtschaftlich herstellbaren und hohe Fertigkeitswerte aufweisenden Spreizdübel zu schaffen, bei dem ein Ueberspreizen, beispielsweise bei Anwendung in weichen Aufnahmematerialien, nicht auftritt.

Gemäss der Erfindung wird dies dadurch erreicht, dass der Dübelkörper und der Flansch zweiteilig ausgebildet sind, wobei das Anschlagteil als hülsenförmige Verlängerung eines in den Dübelkörper hineinragenden Ansatzes des Flansches ausgebildet ist.

Ein solches Anschlagteil wird mit dem Flansch als separates Teil hergestellt und anschliessend mit dem Dübel verbunden. Dadurch kann derselbe Dübel durch Zuordnung entsprechender Anschlagteile für Aufnahmematerialien von unterschiedlicher Dicke verwendet werden. Die einstückige Ausbildung des Anschlagteils mit dem Flansch ist besonders wirtschaftlich, da die Möglichkeit besteht, den Spreizdübel aus zwei kaltverformbaren Teilen herzustellen und in einem nachfolgenden Arbeitsgang miteinander zu verbinden. Das aussenseitige Anschlagen der Spreizarme an der als Anschlagteil wirkenden hülsenförmigen Verlängerung führt zum Vorteil, dass bei unterschiedlichen Längentoleranzen der Spreizarme die gesamte Dübellänge trotzdem eingehalten werden kann.

Für eine einfache Herstellung ist es zweckmässig, dass der Innendurchmesser des als hülsenförmige Verlängerung ausgebildeten Anschlagteils etwa demjenigen des Flansches entspricht.

Das Spreizen durch axiales Stauchen des Dübels kann beispielsweise mittels eines separaten Setzwerkzeuges oder mittels eines mit dem Dübel zu verbindenden bzw. verbundenen Befestigungselementes erfolgen. Das Setzwerkzeug kann einen mit den Angriffsmitteln des Dübels zur Lastaufnahme zu verbindenden Zugdorn aufweisen oder an einem dem Dübel zugeordneten und mit diesem verbundenen Zugbolzen angesetzt werden. Das Befestigungselement kann ein in ein Innengewinde des Dübels einzuschraubender Gewindebolzen oder eine auf einen mit dem Dübel verbundenen Gewindebolzen aufzuschraubende Mutter sein. Durch einen demjenigen des Flansches entsprechenden Innendurchmesser des Anschlagteiles wird der Durchmesser des Zugdorns oder Gewindebolzens durch das Anschlagteil nicht beschränkt. Somit können für Dübel einer bestimmten Grösse mit Anschlagteil dieselben Setzwerkzeuge verwendet werden wie für einen entsprechenden Dübel ohne Anschlagteil. Dies bedeutet insbesondere für den Anwender eine wesentliche Vereinfachung.

Die Erfindung soll nachstehend anhand der sie beispielsweise wiedergebenden Zeichnungen näher erläutert werden. Es zeigen :

Fig. 1 eine erste Ausführung des erfindungsgemässen Dübels, in ungespreiztem Zustand,

Fig. 2 eine weitere Ausführung eines erfindungsgemässen Spreizdübels, in ungespreiztem Zustand,

Fig. 3 den Dübel gemäss Fig. 2, in verankertem Zustand.

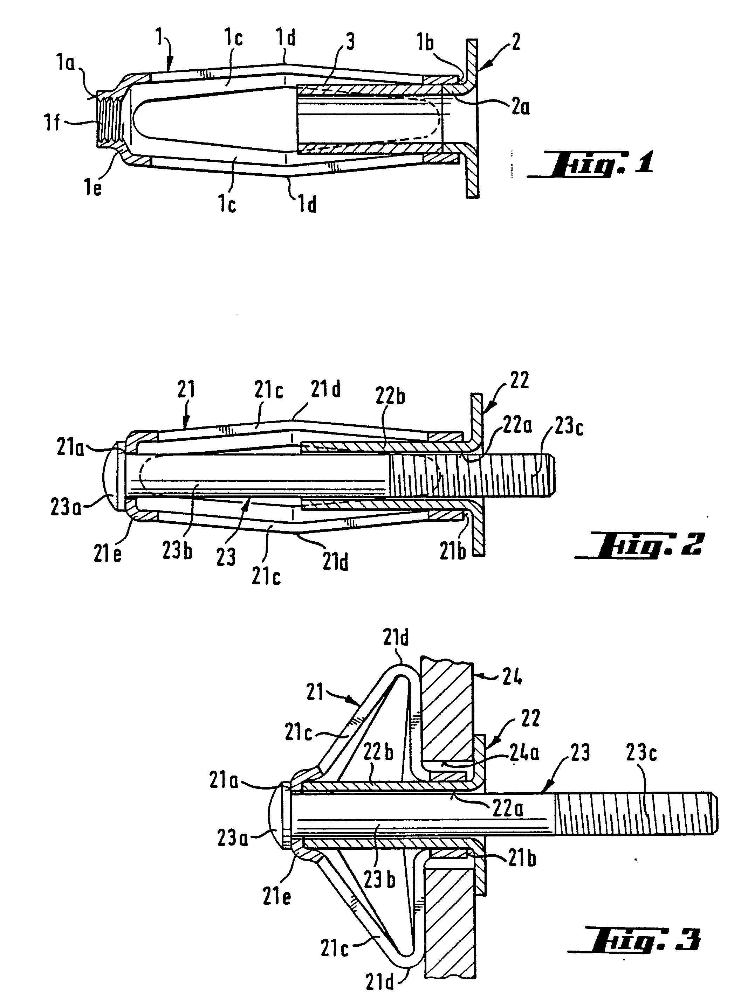

Der aus Fig. 1 ersichtliche Spreizdübel weist einen insgesamt mit 1 bezeichneten Dübelkörper mit einem in Setzrichtung vorderen Ende 1a und einem rückwärtigen Ende 1b auf. Zwischen dem vorderen Ende 1a und dem rückwärtigen Ende 1b des Dübelkörpers 1 erstrecken sich radial ausknickbare Spreizarme 1c mit einer etwa im mittleren Bereich angeordneten Faltstelle 1d. Am vorderen Ende 1a des Dübelkörpers 1 sind die Spreizarme 1c über eine Verbindungsstelle 1e miteinander verbunden. Die Verbindungsstelle 1e ist mit einem Innengewinde 1f als Angriffsmittel zur Lastaufnahme versehen. Das rückwärtige Ende 1b des Dübelkörpers 1 ist mit einem insgesamt mit 2 bezeichneten Flansch verbunden. Der Flansch 2 weist einen teilweise in das rückwärtige Ende 1b des Dübelkörpers 1 ragenden Ansatz 2a auf. Im Dübelkörper 1 ist ferner ein hülsenförmiges Anschlagteil 3 angeordnet. Das Anschlagteil 3 begrenzt die axiale Stauchung des Dübelkörpers 1 bzw das radiale Ausknicken der Spreizarme 1c. Das Anschlagteil 3 ist beispielsweise durch Schweissen, Löten oder Kleben mit dem Flansch 2 bzw mit dem Dübelkörper 1 verbunden. Der Innendurchmesser des Anschlagteils 3 entspricht etwa demjenigen des Flansches 2. Zum Spreizen des Dübels wird ein nicht dargestellter, mit einem dem Innengewinde 1f entsprechenden Gewinde versehener Zugdorn durch den Flansch 2 und das Anschlagteil 3 hindurch in das Innengewinde 1f des Dübelkörpers 1 eingeschraubt. Durch eine an diesem Zugdorn aufgebrachte Zugbelastung wird anschliessend der Dübelkörper 1 axial gestaucht und verankert.

Der aus den Fig. 2 und 3 ersichtliche Spreizdübel besteht aus einem insgesamt mit 21 bezeichneten Dübelkörper und einem damit verbundenen insgesamt mit 22 bezeichneten Flansch. Der Dübelkörper 21 weist ein in Setzrichtung vorderes Ende 21a sowie ein rückwärtiges Ende 21b auf. Dazwischen erstrecken sich radial ausknickbare Spreizarme 21c. Die Spreizarme 21c weisen eine Faltstelle 21d auf und sind an ihrem vorderen Ende über eine Verbindungsstelle 21e untereinander verbunden. Der Flansch 22 weist ein hülsenförmig ausgebildetes, mit dem Flansch 22 einstückig verbundenes Anschlagteil 22b auf. Der Dübelkörper 21 und der Flansch 22 werden von einem insgesamt mit 23 bezeichneten Zugbolzen durchsetzt. Der Zugbolzen 23 weist einen am vorderen Ende 21a des Dübelkörpers 21 anliegenden Kopf 23a sowie einen Schaft 23b auf. Der rückwärtige Endbereich des Schaftes 23b ist mit einem Gewinde 23c versehen.

In Fig. 3 ist der Dübel in ein dünnwandiges, insgesamt mit 24 bezeichnetes Bauteil eingesetzt und axial gestaucht. Das Bauteil 24 weist eine Aufnahmebohrung 24a für den Dübelkörper 21 auf. Das radiale Ausknicken der Spreizarme 21c bzw. das Stauchen des Dübelkörpers 21 wird durch das hülsenförmige Anschlagteil 22b begrenzt. Die Verbindungsstelle 21e kommt dabei am freien Ende des Anschlagteiles 22b zur Anlage.

## Patentansprüche

1. Spreizdübel zur Befestigung an dünnwandigen Bauteilen, mit einem Dübelkörper (1, 21) mit unter axialer Stauchung radial ausknickbaren Spreizarmen (1c, 21c), die am in Einführrichtung rückwärtigen Ende einen als Widerlager dienenden Flansch (2, 22) aufweisen und an ihrem in Einführrichtung vorderen Ende miteinander verbunden sowie an der Verbindungsstelle (1e, 21e) mit Angriffsmitteln zur Lastaufnahme versehen sind, wobei zwischen den Spreizarmen (1c, 21c) sowie zwischen dem Flansch (2, 22) und der die Angriffsmittel aufweisenden Verbindungsstelle (1e, 21e) der Spreizarme (1c, 21c) ein sich im ungespreizten Zustand des Dübels etwa entlang der Hälfte des Abstandes zwischen dem Flansch (2, 22) und der die Angriffsmittel aufweisenden Verbindungsstelle (1e, 21e) der Spreizarme (1c, 21c) erstreckendes, die axiale Stauchung begrenzendes Anschlagteil (3, 22b) vorgesehen ist, dadurch gekennzeichnet, dass der Dübelkörper (1, 21) und der Flansch (2, 22) zweiteilig ausgebildet sind, wobei das Anschlagteil (3, 22b) als hülsenförmige Verlängerung eines in den Dübelkörper (1, 21) hineinragenden Ansatzes (2a, 22a) des Flansches (2, 22) ausgebildet ist.

2. Dübel nach Anspruch 1, dadurch gekennzeichnet, dass der Innendurchmesser des als hülsenförmige Verlängerung ausgebildeten Anschlagteiles (3, 22b) etwa demjenigen des Flansches (2, 22) entspricht.

## Claims

1. An expansible dowel for fastening to thin-walled structural parts, having a dowel body (1, 21) with expansion arms (1c, 21c) which can buckle radially under axial compression, which have at the rearward end (in the insertion direction) a flange (2, 22) serving as an abutment and which are connected together at their front end (in the insertion direction) as well as being provided at the connection point (1e, 21e) with application means for load absorption, in which respect provided between the expansion arms (1c, 21c) as well as between the flange (2, 22) and the connection point (1e, 21e), having the application means, of the expansion arms (1c, 21c), is a stop part (3, 22b) which in the unexpanded state of the dowel extends approximately along half the distance between the flange (2, 22) and the connection point (1e, 21e), having the application means, of the expansion arms (1c, 21c) and which limits the axial compression, characterised in that the dowel body (1, 21) and the flange (2, 22) are two-part in design, in which respect the stop part (3, 22b) is designed as a sleeve-shaped extension of an adjoint-piece (2a, 22a) of the flange (2, 22) which projects into the dowel body (1, 21).

2. A dowel according to claim 1, characterised in that the inside diameter of the stop part (3, 22b) designed as a sleeve-shaped extension corresponds approximately to that of the flange (2, 22).

**Revendications**

1. Cheville à expansion pour la fixation sur des éléments de construction à parois minces, comprenant un corps de cheville (1, 21) avec des bras d'écartement (1c, 21c) pouvant s'infléchir radialement par compression axiale qui présentent à l'extrémité postérieure dans le sens de l'introduction une bride (2, 22) servant de butée, sont reliés, l'un à l'autre à leur extrémité antérieure dans le sens d'introduction et munis, dans la zone de liaison (1e, 21e), de moyens d'attaque pour la fixation de la charge, un élément de butée (3, 22b) qui, à l'état non écarté de la cheville, s'étend sensiblement le long de la moitié de la distance entre la bride (2, 22) et la zone de liaison (1e, 21e) des bras d'écartement (1c, 21c) présentant les moyens d'attaque et limite la compression axiale, étant prévu entre les bras d'écartement (1c, 21c) ainsi qu'entre la bride (2, 22) et la zone de liaison (1e, 21e) des bras d'écartement (1c, 21c) présentant les moyens` d'attaque, caractérisée en ce que le corps de cheville (1, 21) et la bride (2, 22) sont réalisés en deux parties, l'élément de butée (3, 22b) étant constitué d'un prolongement en forme de douille d'un rebord (2a, 22a) de la bride (2, 22) pénétrant à l'intérieur du corps de cheville (1, 21).

2. Cheville selon la revendication 1, caractérisée en ce que le diamètre intérieur de l'élément de butée (3, 22b) constitué d'un prolongement en forme de douille correspond approximativement à celui de la bride (2, 22).

Fig. 1

Fig. 2

Fig. 3